# EUROPEAN PATENT SPECIFICATION

(11) **EP 1 438 144 B1**
(45) Date of publication and mention of the grant of the patent: **31.08.2005**
(21) Application number: 02785083.3
(22) Date of filing: 25.10.2002
(51) Int. Cl.: B05B 12/00, G05B 19/402, G05B 19/41, G05B 19/4061

(54) **A METHOD OF AUTOMATICALLY TREATING OF A SURFACE**
VERFAHREN ZUR AUTOMATISCHEN FLÄCHENBEHANDLUNG
PROCEDE DE TRAITEMENT AUTOMATIQUE D'UNE SURFACE

(30) Priority: 26.10.2001 DK 200101576
(43) Date of publication of application: 21.07.2004
(73) Proprietor: Inropa APS, 9700 Bronderslev (DK)
(72) Inventor: ANDERSEN, Henrik, John, DK-9700 Bronderslev (DK); MADSEN, Ole, DK-9210 Aalborg S (DK)
(74) Representative: Plougmann & Vingtoft A/S
(86) International application number: PCT/DK2002/000713
(87) International publication number: WO 2003/035275

(56) References cited:
- EP-A- 0 606 627
- EP-A- 0 895 850
- DE-A- 19 852 079
- PATENT ABSTRACTS OF JAPAN vol. 2000, no. 03, 30 March 2000 (2000-03-30) & JP 11 333339 A (KAWASAKI HEAVY IND LTD), 7 December 1999 (1999-12-07)
- PATENT ABSTRACTS OF JAPAN vol. 1995, no. 10, 30 November 1995 (1995-11-30) & JP 07 168617 A (MATSUSHITA ELECTRIC WORKS LTD), 4 July 1995 (1995-07-04)

## Description

### FIELD OF THE INVENTION

The invention relates to a method of automatically preparing surface treatment of a part, preferably to be painted, where a tool is used to treatment of the surface of the part.

A method according to the preamble of claim 1 is known from JP07-1686 17A.

### Painting businesses

Currently the market for highly flexible low volume, high variant automated painting cells is practically not existing, since the required technology was and is still not available, at least not at economically feasible conditions. There is a growing demand for such systems. Small and Medium Sized Enterprises are currently forced to outsource their painting processes or to maintain costly manual paint shops. This is also valid for large companies with a high number of different product variants.

Application of robotic painting based on conventional programming technology is not feasible for highly varying parts in low batch sizes because of economic constraints (too high costs for initial programming efforts and continuous reconfiguration). This is also the reason, why there are only few robotic installations nowadays for this type of tasks and most of these were not profitable for the robot vendors. The potential market is large, since there are e.g. more than 10,000 companies with manual paint shops only in Germany!

### Non-painting businesses

In applications similar to the painting process, like sealing, cleaning, sandblasting or airbrush, the invention also relates to non-painting businesses by adopting the sensing and off-line programming approach to the higher requirements concerning positional accuracy. One key development towards these applications would be to enable the usage of available 3D CAD data, which is often available for these applications.

### BACKGROUND OF THE INVENTION

One project, which is related to the objectives of the present invention, is called "SmartPainter", a co-operative research project between University of Southern Denmark and Odense Steel Shipyard Ltd. (respectively its spin-off company Amrose Ltd.). In the SmartPainter project, the painting motion was generated by virtually folding out the surfaces to be painted, putting on the painting motion and folding back the surfaces and letting the painting motions following this folding of surfaces. However, this strategy is only applicable when 3D models of the objects are available and the curvature of the objects is relatively small. The SmartPainter technology is very strongly aiming at the shipbuilding industry, where "one-of-a-kind" production is typical, but CAD-models are existing in every case. Usually there are large, plain surfaces and no complex features like cooling ribs or cavities.

The US company ART has a patented technology called "ARTomation" which they claim enables the user to quickly, easily and intuitively program a robotic painting system "off-line" in minutes. The ARTomation system consists of the following steps: (1) Take a digital picture (photo) of the parts as they are presented to the system, (2) On a PC import the photo and describe the tasks you want to perform (manually!) using the ARTomation software application, (3) When the user is satisfied with the paths and the associated information, a "robot-control program" is automatically generated by the software and a file which includes all the sequenced commands to all the process control equipment, motors and drives is written to disk or Ethernet and finally transferred to the System Controller on the factory floor, (4) On the factory floor, the file is then loaded to run. Corrections to the paint paths can be made simply by re-opening the file on the PC and making the changes at this location.

US 5,521,477 describes a process of simulating a painting process, where the surface to be painted initially is mapped out, and where the painting process in question subsequently is established and simulated. The purpose of this process is to obtain a sufficient and even surface layer of paint depending on the surface of the item being painted. There is however no mentioning at all of how the surface is mapped out.

Related publications:
- P. Hertling, L. Hog, R. Larsen, J. W. Perram and H. G. Petersen. Task Curve Planning for Painting Robots - Part I: Process Modelling and Calibration.
   IEEE Transactions on Robotics and Automation, 12, No. 2, April 1996, 324-330.
- J. W. Perram, H. G. Petersen, P. T. Ruhoff and A. Sorensen. A New Model for Advanced Control of Robotic Manipulators. Proceedings of the 6th IASTED Int. Conf. on Robotics and Manufacturing 120-124.
- M. M. Olsen and H. G. Petersen. A new method for estimating parameters of a dynamic robot model. Submitted to IEEE Transactions On Robotics and Automation.
- S. Thorkildsen and D. Sølvason. Mathematical Modelling of paint flow from a spray gun. 35th European Study Group with Industry, final report.
- S. Thorkildsen, D. Sølvason, H.G. Petersen Task Curve Planning for Painting Robots - Part II: Path Representation and Path Generation.

### SUMMARY OF THE INVENTION

The object of the present invention is the automation of programming robots for treating a surface of a part such as painting applications for small lot sizes with a very high number of variants. It is also the object of the invention to find technical solutions with a significant robustness under industrial environmental conditions.

This object is obtained by a method for automatically preparing treatment of a surface of a part using a tool for the treatment, said method comprising approximating an existing free-form or complex surface geometry by defining elementary surface geometries, and utilising said elementary surface geometries to establish a number of so-called virtual surfaces, said virtual surfaces being considered as the regions to be painted, and finally utilising said virtual surfaces for establishing treatment procedures, preferably empirically defined treatment procedures, one of each treatment procedures being assigned to each of the virtual surfaces. A preferred method for treatment of the surface of the part is a painting procedure, and where the tool is a paint tool mounted on a robot.

A possible feature of the method comprises controlling each of the lines of treatment for establishing the extension of the patches found within the vicinity of the lines of treatment, the establishment being utilised for establishing whether the lines of treatment being controlled extends along only continuously adjacently located patches or extend along discontinuously non-adjacently located patches.

By adopting this feature of the invention, it is possible to prevent any treatment, such as painting, at areas along the surface, where actually no surface is present. When establishing treatment lines, such as the paint lines, those lines extend from one point of the motion to another point of the motion of the tool for treating the surface. However, between these points of motion, there may be one or more areas along the line of treatment, where a continuity of the surface is interrupted, thus presenting a discontinuity of the surface being treated along the line of treatment. In this case, it is important to stop the treating action of tool, i.e. stop as for example paint being applied, as no surface is present for treatment. However, the motion of the tool is maintained to fulfil the motion along the line of treatment and to travel to the next patch to be treated subsequent the discontinuity of the surface.

Accordingly, a possible feature of the method according to the invention may be also to encompass control of the amount of treating substance being applied along the lines of treatment, and the control being used to determine not to apply treatment on extensions of the lines of treatment situated between patches, which are discontinuously non-adjacently located patches.

Another possible feature of the method according to the invention comprises assigning at least one of the following features to each of the patches: a geometrical feature such as a specific shape, as example a rib, of the part in the region of the location represented by the patch in question, a textual feature such as a the roughness or the porosity of the surface of the part at the location of the patch, a physical feature such as the material, which the part is made of at the location of the patch in question or the temperature of the part at the location of the patch.

By assigning one or more of the features mentioned, it is possible to control the treatment especially in relation to geometrical features of the surface to be treated, but also in relation to physical features of the surface. This will enhance the quality of the treatment procedure beyond the quality obtained by applying the treatment procedure in relation to the geometrical features, i.e. the extension of the surface and any discontinuities along the surface. As can be seen from the above features, the features may necessitate specially adopted treatment procedures, as example a rough or porous surface perhaps necessitating more treatment such as more paint being applied in comparison with a smooth surface of a surface not being porous. Also, a cold surface may need a differentiated treatment in comparison with a warm or even hot surface.

Accordingly, a possible feature of the method according to the invention may be also to encompass control of the amount of treating substance being applied along the lines of treatment, and the control being used to determine to apply treatment, amongst other conditions for applying treatment to the surface of the part, in relation to at least one of the features assigned to the patches.

Even though the invention is primarily aimed towards robotic spray painting it can be applied for planning process motions for the range of process in the field of surface treatment. Examples of processes in which the invention can be applied for planning of process motions: Powder painting, washing and cleaning with liquid (including high-pressure cleaning), washing and cleaning with physical contact between tool and part, degreasing, sandblasting, polishing, sealing (e.g. for corrosion protection), inspection systems, polishing, grinding, deburring and gluing.

Following advantages may be obtained by the present invention when used for painting:
- Reducing the average human programming effort for robot painting by 75%. The invention is capable of automatically generating a paint program for a wide range of industrial parts.
- Reducing the still required human painting and/or supervision by 90%. The invention is capable of running without or with very little human intervention or supervision.
- Reducing paint material waste by more than 10%. The invention provides automatically generated painting strategies, which allow saving paint material compared to the manual painting process.
- Automatic generation of collision-free paint paths and robot task scheduling.
   The invention will deliver a new model-based approach to automatically determine reasonable paint strategies.
- Open system architecture for allowing company-specific adaptations.
   The invention will allow the end-users to incorporate their own painting expertise.
- High level of applicability and acceptance for very different parts to be handled.
   The invention will allow a broad variety of industrial parts to be painted (from small handles to huge truck frames).
- Robustness against part changes and variations. The invention will compensate small deviations in shape and size of part variants.

Automation of painting does not only increase the overall productivity, but also helps to keep consumption of resources and energy low by reducing the number of re-painting operations needed. An increase in quality of painting should also be possible. Transport requirements will be decreased. Nowadays painting is often outsourced due to the low cost efficiency if there are only relatively small volumes. By introducing highly flexible painting, more companies will be able to keep painting in-house, and thus, being able to avoid transport of the parts to a remote painting unit and back.

The most potential market of the invention is the general industry, where painting processes mainly focus on protection against corrosion and thus, the quality requirements are not as high. On the other hand, economic justification of painting automation in the general industry is much more difficult than in the automotive industry. A market could be opened up by the invention if the concept could be extended to become a more generic approach for automatic robot programming for a large number of robotic, contact surface treatment applications. Even in these well-established application areas there is a substantial demand for cost-efficient automation systems when it comes to low volume, high variant production.

### BRIEF DESCRIPTION OF THE FIGURES

In the following, the invention is described in more detail referring to the figures, where
fig. 1 shows the input to and the output of the method according to the invention, the invention called PaintPlanner™,
fig. 2 shows parts to be painted, a gear motor amongst other surface features having ribs and a rear view side mirror of a car having a more continuous surface geometry,
fig. 3 shows superiorly a possible and preferred system design of the invention, where Generate Trajectory is the main feature of the method according to the invention,
fig. 4 shows schematically a part to be painted having consisting in a cylinder and a box and exhibiting a transition between the cylinder and the box,
fig. 5 shows a part to be painted having direction of orientation frame for rib-normalised,
fig. 6 shows to the left an example of free form surface geometry and to the right the free form geometry represented by patches,
fig. 7 is a flow diagram with a decomposition of the function "Generate Trajectory", where all process steps are main features of a preferred method according to the invention
fig. 8 is a flow diagram with a decomposition of the function "Estimate main faces and virtual surfaces", where all steps also are main features according to the invention
fig. 9 shows schematically a part to be painted consisting of two boxes and a cylinder and comprising a plurality of flat surfaces and a cylindrical surface,
fig. 10 shows several parts to be painted and hanging on the same fixture, the parts intended for being painted with the same paint strokes,
fig. 11 shows schematically the part shown in fig. 9, but consisting of virtual surfaces instead of curved surfaces, and
fig. 12 show a plane view of the part shown in fig. 11 and showing that different surfaces are painted along the same paint paths.

### DETAILED DESCRIPTION OF THE INVENTION

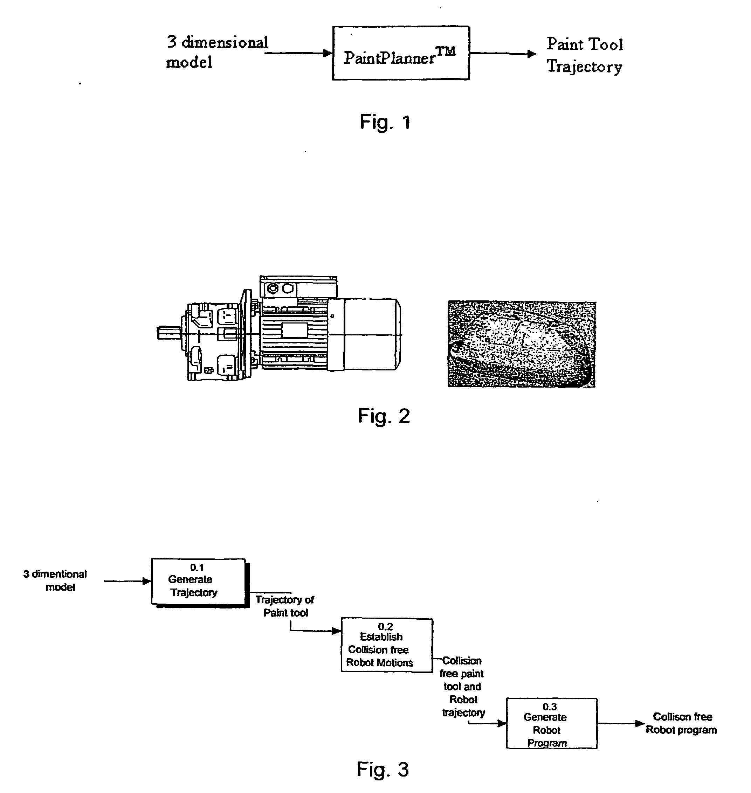

This section describes the inverse solution from geometry model to painting motion. The basis for the described methods is that the parts to be treated, such as being painted, are specified by three-dimensional models of their surface geometries. The three-dimensional models may e.g. origin from sensor- or CAD data. Fig. 1 shows the output of the invention being a specification of a possible trajectory for the treating tool to treat the part.
The three-dimensional models may be enriched by local or global classification of their surfaces into surface features comprising typical characteristics of the surface geometries, such as cooling ribs, holes, cavities etc. The three-dimensional models including eventual classification into surface features are called reference geometries. One reference geometry (one part) may consist of several surface features covering local geometric characteristics of the surface.

As previously mentioned, the invention is primarily intended for painting businesses, however, non-painting businesses will also be able to benefit from the invention. Nonetheless, for the sake of darity, in the following part of the description, the method according to the invention will be described with reference to the treatment being painting.

Fig. 2 illustrates two different parts. The left part is an electrical motor and gearbox, which comprises a number of local surface features, such as cooling ribs (the horizontal lines in the middle) and cavities (the four recess regions at the left side of the part). All part surfaces/reference geometries, which cannot be categorised as special surface types are categorised as free form geometry features, such as the rear view mirror shown in the right part of fig. 2.

The invention consists of three main modules: 'Generate Trajectory', 'Establish Collision Free Robot Motions' and 'Generate Robot Program', which are shown in fig. 3.

In the module 'Generate Trajectory' the reference geometries of the parts are evaluated according to the geometry library and a procedure library, consisting of painting procedures for each feature type in the geometry library. The output of this module is a set of paths for the paint tool and a set of process parameters for the painting equipment. The output from this module only considers motion of the paint tool relatively to the surfaces that will be painted. Collisions between robot or paint tool and parts are not considered in this module and neither is the accessibility of the robot.

The module 'Establish Collision Free Robot Motions' copes with establishment of possible robot motion for any robot chosen for executing the specified paint tool motions. This module will apply routines for avoiding collisions between the robot system, the paint tool and the parts or the environment in the paint booth. This implies that the module is allowed to change the paths of the paint tool specified by 'Generate Trajectory'. The output from 'Establish Collision Free Robot Motions' is specified robot motion that ensures a paint tool motion, which comes as close to the above-specified motion as possible for a specific robot and tool in a specific paint booth environment. Robotic singularities are additionally avoided in this module.

The module 'Generate Robot Program' takes the output from the previously described module and converts the specified robot motions to a specific robot language suitable for the chosen robot.

### Generate Trajectory

This module comprises activities for calculation of trajectories for the paint tool. It has been observed that human painters apply large paint strokes, even on complex parts. These paint strokes usually continue from one end of the part to the other end, even though the geometric attributes of the part changes during this stroke. Also painting robots programmed by highly skilled application engineers use these large paint strokes throughout the parts.

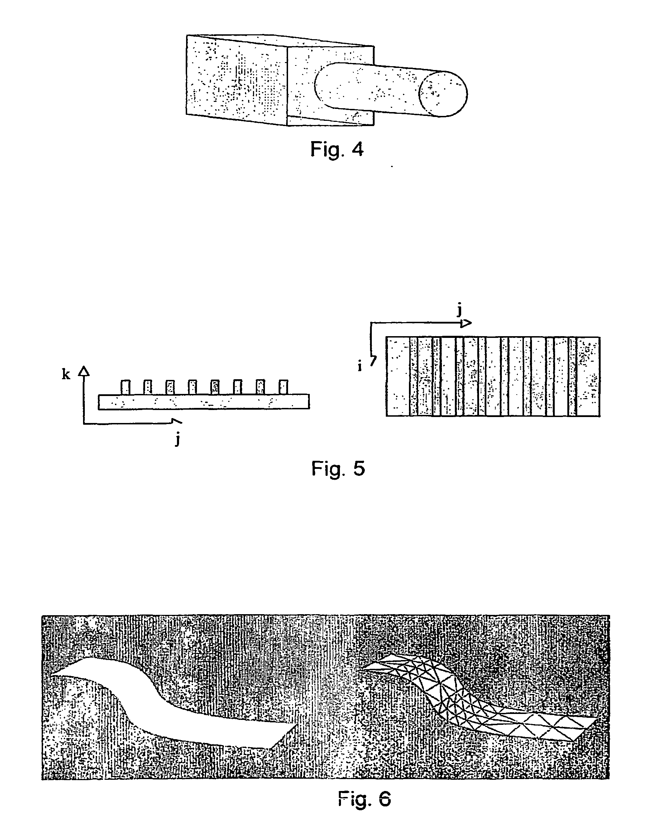

The same strategy is applied in the invention system. This means that a method that facilitates calculation of continuous and differentiable paint tool paths must be specified. This is a problem when the paint surfaces consist of non-continuous transitions between different types of geometries, such as e.g. cylinders and boxes, which is shown in fig. 4.

In order to ensure continuous robot motions during painting of transitions between geometries it has been chosen to establish virtual geometries with smooth transitions. Two methods are identified for establishing smooth transitions between geometries.

One method is to convert the three-dimensional model into an exact NURBS model (or another spline based model) and to extract a virtual surface description, which is less detailed than the reference surface. This may be done by limiting the number of terms in the spline equations. By this method the transitions between different reference geometries will be more smooth and consequently it will be possible to establish continuous motions for the paint tool.

Another method is to specify a number of virtual surfaces replacing the reference geometry, and connecting these virtual surfaces in such a way that the transition from one virtual surface to the next is continuous. Alternatively in the transitions between virtual surfaces are not continuous the paint tool shold be allowed to follow the virtual surfaces within a certain tolerance. This will enable continuous paint tool motions even though transitions between virtual surfaces are not continuous.

In case the reference model is enriched with geometry features, each virtual surface has at least one feature. All available features must be specified in a geometry library. It must be possible to define special geometric features for all types of geometries in this geometry library, both for free-form geometries and for more complex surfaces, such as rib sections and cavities.

A procedure library corresponding to the geometry library defines painting procedures for all geometries in the geometry library. By applying these procedures to the geometries of the part, it will be possible to establish a robot program for painting the part. Examples of geometry libraries and procedure libraries are given in the following sections.

### Geometry library

The geometry library holds information about specified surface features. These surface features refer to painting procedures that specifies how to execute the painting process when each of these specific surface features is present.

The specification of surface features may include variable attributes. An example of a surface feature is a surface of cooling ribs. Different types of cooling ribs can be defined; one of these is normalised ribs, such as shown in fig. 5. For a normalised rib-section the ribs are all in the same plane. The height of the ribs may vary throughout the normalised rib surface.
The following attributes are specified for normalised rib-sections:

| Attribute | Explanation |
|---|---|
| MinimumHeight: | The minimum distance between the top and the bottom of the ribs in the rib-section. |
| MaximumHeight: | The maximum distance between the top and the bottom of the ribs in the rib-section. |
| RibDistance: | The distance between the beginning of two subsequent ribs. |
| Orientation Frame: | The co-ordinate frame which identifies the orientation of ribs (i, j and k unit vectors). |

The orientation frame specifies the direction of the normalised rib section. The i-vector is in the direction of the ribs along the surface on which they are attached. The k-vector is also in the plane of the ribs, but perpendicular to the surface on which they are attached and pointing away from this surface. The j-vector is placed as the third vector in a right hand co-ordinate system.

Other examples of surface features are holes, cavities and groups of holes and cavities in the surface. Additionally free form surfaces as shown on the mirror in fig. 2 are special surface features. These can be even further categorised according to the angles between the normal vectors of the individual surface elements of such a surface region.

Fig. 6 shows how free form surfaces can be modelled by patches (having three or more vertices). This method allows a very general modelling of any possible surface geometry, and at the same time it gives the possibility to calculate normal vectors for each patch in the geometry model.

Free form surfaces that are represented by a number of patches have an unpredictable curvature in three-dimensional space. Free form surfaces will be represented by virtual surfaces just as well as cooling rib-section surfaces and surfaces with other features. Virtual surfaces are larger well-defined regions, which describes a region of the reference geometry. Virtual surfaces are plane rectangular regions or other well-defined regions, such as spherical, cylindrical etc. Features and attributes describing the reference geometry are inherited to the virtual surfaces.

### Procedure library

The procedure library relates painting procedures to the surface features specified in the geometry library. Painting procedures in the procedure library specifies how to compute trajectories and behaviours of the paint tool for each geometry feature. The trajectory is the geometric path of the paint tool and the behaviour is the painting parameters applied to the paint tool while moving along this path. Painting parameters include angles of the paint tool relative to reference geometry or virtual surfaces, speed of the paint tool, paint flow, Air flows, Distance between paint tool and reference geometry etc.

A Painting procedure specifies the distance between Paint lines. These are lines along which the paint tool must be moved. For each paint-line a number of paint strokes are specified. The paint strokes specify the paint tool motion and behaviour and are part of the painting procedure. A paint stroke is following a paint line, though an off-set is allowed. The paint strokes belonging to a paint line will typically have different painting parameters.

### Methodical Description

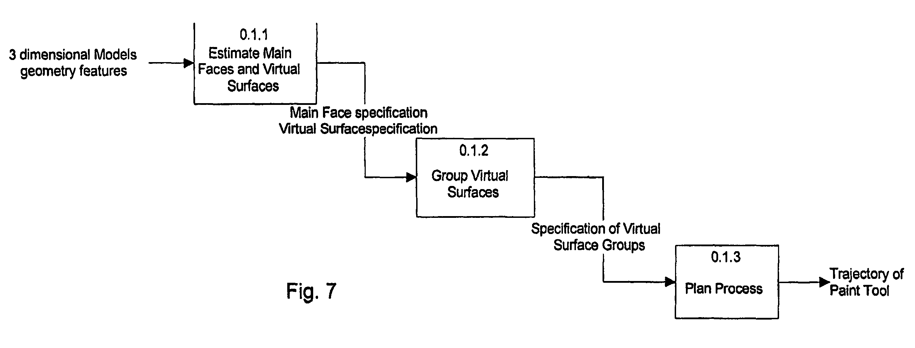

The chosen strategy is described in this section. The main idea is to establish painting motions, which follows a plane surface (or other mathematical well-defined surface) no matter if the reference geometry is plane or not. The function 'Generate Trajectory' is decomposed in fig. 7.

### Estimate Main faces and Virtual surfaces:

The reference geometry is in the following description represented by patches, each representing a part of the reference geometry. A patch specifies an area of the reference geometry and is typically a triangular plane surface. Alternatively a patch can have any shape as long as it represents a part of the reference geometry. According to the present Invention as claimed, a patch is an elementary surface geometry in the sense that a patch is the surface geometry forming the basic element for establishing supplementary surface geometries.

All patches will be projected into a limited number of main faces. A main face is a plane with a fixed orientation but an arbitrary position in 3D-space. A main face is only specified by its normal vector. According to the present invention, a main face is a supplementary surface because a main face is generated based on a number of patches. All surfaces of the part are attached to a specific main face.

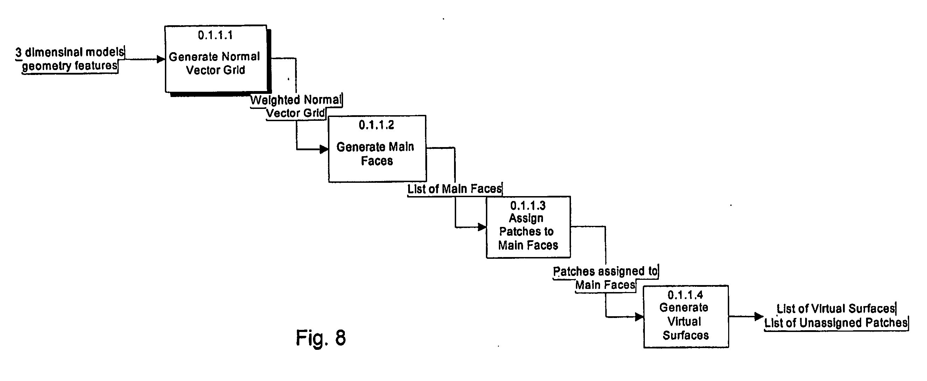

All patches within one main face will then be sorted according to their position in 3D space. A number of virtual surfaces are established for each main face in order to group patches which comprises equal geometry features and which can be painted using the same paint strokes. The virtual surfaces have the same normal vector as the corresponding main face, but have specified positions in 3D space. According to the invention, virtual surfaces are also supplementary surfaces because also virtual surfaces are generated initially based on a number of patches. The function Estimate Main faces and Virtual Surfaces is decomposed in fig. 8.

### Generate normal vector grid:

The function is used for parts, which are not positioned in a fixture. The purpose is to provide information of direction of the dominating surfaces on the part. This will facilitate the specification of main faces. A grid of normal vector fields is established with a chosen density (corresponding to the normal vectors representing the hexagonal patches of a football). A weight value is associated with each of the fields of directions in this grid. A normal vector direction is calculated for each patch of the reference geometry. Each patch is then associated with the nearest normal vector direction of the grid. The area of the patch is added to the corresponding weight value of the grid. The directions of the grid having the highest weight values are those representing the dominating surface directions of the reference geometry.

### Generate Main Faces:

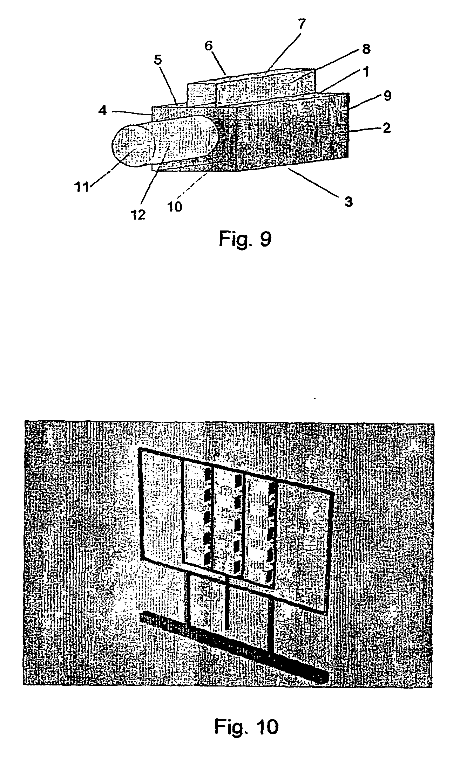

Any number of main faces may be used for a painting application. The combination of shape and size of the parts determines a suitable number of main faces. For relatively small parts it is sufficient to establish six main faces with 3 + 3 orthogonal surfaces, such as the surfaces of a dice. The main faces are specified in such a way that the main faces follow the main directions of the reference surfaces.
A simple example of how to establish main faces is shown in fig. 9. Two boxes connected to a cylinder are shown. There are eleven flat surfaces to be painted on the part and it is relatively easy to establish six main faces that all comprise the orientations of one or more plane surfaces. The main faces comprises the following surfaces of the shown part:
Main face 1: Surface 1, 5 and 7.
Main face 2: Surface 2 and 8.
Main face 3: Surface 3 and 14.
Main face 4: Surface 4 and 6.
Main face 5: Surface 9.
Main face 6: Surface 10 and 11.

In some cases the main face directions are generated on the basis of simpler rules. This is e.g. if specific painting directions are desired, e.g. when painting parts in a fixture such as shown in fig. 10.

Fig. 10 shows how the parts are hanging on a fixture and it is practical to execute painting motions along the surfaces of this fixture in order to obtain long and continuous robot motions. Therefore, the main faces are generated such that the normal vectors of the main faces are normal to the faces of the fixture. In the shown example in fig. 10, the normal vectors of the main faces would then be parallel to the normal vectors of the boxes hanging on the shown fixture.

### Assign Patches to Main Faces:

The function assigns each e.g. patch to a main face. The angle between the normal vectors of the patches and the main faces are evaluated. Each patch is assigned to the main face for which the smallest angle between normal vectors of patch and main face is found.

### Make Virtual Surfaces from Patches and Calculate max. Distance:

The function generates virtual surfaces, on which the patches are projected. The purpose of these virtual surfaces is to facilitate establishment of specific paint strokes. The virtual surfaces are specific planes in 3D-space with boundaries and normal vectors. When planning the painting parameters later in this system, the virtual surfaces will be considered the planes to be painted.

For each main face a number of virtual surfaces will be assigned. The virtual surfaces assigned to a main face have the same normal vector as the main face but the boundaries can be anywhere in 3D-space.

Virtual surfaces are established for each main face such that all patches can be assigned to a virtual surface. A set of rules for the different types of virtual surfaces is specified. These rules include the maximum angular deviations around the individual axes of the surface frames and the maximum offset between patches and the assigned virtual surface. It must be taken into account during establishment of virtual surfaces that the patches attached to them obey these rules. The function must specify as many virtual surfaces as necessary for including all patches in the geometry model.

For each virtual surface the distance is calculated and specified between this surface and the most distant patches on each side of the surface, which are attached to it.
In case the area of individual virtual surfaces is very small (e.g. less than 4 cm²) and the length and width is small (e.g. less than 3 cm), the virtual surface will be erased.

The patches in the geometry model will get a new attribute - Virtual Surface Assignment, which specifies the specific virtual surface to which the patch is attached. It may happen that some patches cannot be attached to any virtual surfaces because the angular deviation between the patches and the available main faces are larger than allowed. In this case the patches will remain unassigned to virtual surfaces.

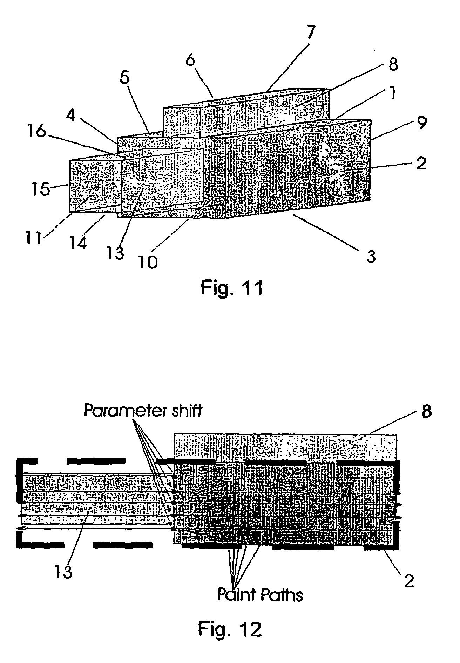

Fig. 11 shows the assumption that the patches of the cylindrical surface 12 from fig. 9 is attached to four plane virtual surfaces of equal size. The first virtual surface is oriented in the same direction as that main face, which has the largest area - in this case it is main face number 2 or 4.

### Group virtual surfaces:

The function (see fig. 7) evaluates the individual virtual surfaces mentioned above in order to group these virtual surfaces, which can be painted by using the same paint lines and painting motions of the paint tool. One condition for this is that the normal vectors of the virtual surfaces are the same, i.e. they are assigned to the same main face.

Additionally the virtual surface groups must provide motion compatibility of the comprised virtual surfaces, i.e. it must be possible to integrate the paint tool motions for the virtual surfaces into long strokes covering more than one virtual surface. This means that e.g. the painting direction must be the same within a group of virtual surfaces.

Another condition is that the distances between the paint lines are the same in order to provide continuous robot motions. However the paint lines do not have to be parallel to the virtual surfaces. Angular deviations between the paint lines and the virtual surfaces may be applied as long as the tolerances for spray distance are kept.

The spray distance between the paint tool and the reference geometry, the specified angles between paint tool and reference geometry (forward angle and side angle) must be within small intervals.

Regarding fig. 12, the virtual surfaces numbered 2 and 13 are grouped for using the same straight-line painting paths. This is on condition that the painting direction is along the surfaces, which means that the painting paths can continue through the transition between the surfaces without stopping or changing direction.

### Plan process

The function (see fig. 7) plans the motions of the paint tool. No attention to collisions between the paint tool and the part or the environment is considered in this function.

For each virtual surface group the paint lines are generated in a plane parallel to the virtual surfaces of the group, also called a paint rectangle. The Paint rectangle is positioned approximately in the middle between the two most distant virtual surfaces in the group. This is in order to minimise the distance between this plane and the patches assigned to the virtual surfaces, and by this minimising the distance deviations between the reference geometry and the paint lines. The paint rectangle has the smallest possible size, which is required to include all parts of the virtual surfaces. When generating paint lines on the paint rectangle it is then made sure that all parts of the virtual surfaces are covered by these lines.

After specifying the paint lines, each paint line is evaluated by letting a function analyse the distance between the paint line and the patches of the reference geometry at discrete points along the paint line. This evaluation serves the purpose of establishing the extension of patches along the paint lines in order to evaluate whether the paint lines cover only continuously adjacently located patches or cover discontinuously non-adjacently located patches. Pieces of paint lines in such areas where no patches of the reference geometry are present will be removed, and by that waste of paint material is avoided. This function may remove the paint line or break it into one or several shorter pieces, which still does not contain any information on the paint tool behaviour. The painting procedure corresponding to the geometry feature of the virtual surface is found. The painting parameters specified in the painting procedure are attached to the paint line, and thereby the spray gun motion and the painting parameters can be specified.

A number of paint strokes are applied for each paint line, according to the number of paint strokes specified in the painting procedure. Each paint stroke specifies the paint tool motion and behaviour for one stroke including painting parameters and painting speed.

Some painting parameters may be implicitly specified by selecting a pre-defined set of parameters specified in en external painting controller or robot controller.

### Establish Collision Free Motions

This module (see fig. 3) provides collision free motions, which are as close as possible to the paint tool motions specified by the above-described modules. In 'Establish Collision Free Motions' it is possible to attach a specific robot, chosen by the system operator, to the paint tool motions, and establish robot motions that does not cause any collisions between the robot or the paint tool and their environment.

The method for establishing the collision free robot motions is to use an existing collision avoidance system for the final off-line programming task. The system provides a simulation tool including virtual state forces for simulation of possible robot motions.

The paint tool is moved from one point to the next by a virtual force of attraction. During this motion virtual forces are used for repulsion of the robot and the physical objects in the paint booth. In this way the robot is pulled from one paint tool position to the next avoiding collisions with the parts or other objects in the paint booth.

It is possible to integrate tools for avoiding robotic singularities and joint limitations in the same way as for avoiding collisions.

### Generate Robot Program

This module (see fig. 3) translates the collision free paint tool trajectory and behaviour (painting parameters) to a formalised robot program in native robot language - eventually also a program for controlling painting equipment. The output is a robot program that is ready for execution in the work cell.

## Claims

1. A method for automatically preparing treatment of a surface of a part using a tool for the treatment, said method comprising
- approximating an existing free-form or complex surface geometry by defining elementary surface geometries, **characterised by**
- utilising said elementary surface geometries to establish a number of so-called virtual surfaces, said virtual surfaces being considered as the regions to be painted and
- finally utilising said virtual surfaces for establishing treatment procedures, preferably empirically defined treatment procedures, one of each treatment procedure being assigned to each of the virtual surfaces.

2. A method according to claim 1, where the elementary surface geometry consists of a so-called patch, and where a number of virtual surfaces are assigned to each of so-called main faces.

3. A method according to claim 2, said method comprising dividing the surface of the part into patches of the surface, each of said patches of the surface being allocated to one of a number of the so-called main faces, said patches and each of said main faces being used to define a number of the so-called virtual surfaces, and each of said virtual surfaces being used for establishing treatment procedures for treating the surface.

4. A method according to claim 3, where the main faces are established by determining a directional vector, preferably the normal vector, of each of the patches of the surface, and where the directional vectors of the patches are collected within directional vector fields, and a main face being defined having a directional vector within the directional vector field of a number of patches, and said patches being assigned to the main face in question.

5. A method according to claim 3 or claim 4, where the virtual surfaces are being defined on the basis of the number of and the direction of the directional vectors of the patches within a directional vector field, and said virtual surfaces furthermore being defined on the basis of a surface specific feature being a feature specific to a number of patches.

6. A method according to any of claims 2-5, where the virtual surfaces are being sorted in groups in relation to the assignment to the main faces.

7. A method according to any of claims 2-6, where the virtual surfaces also are sorted in groups in relation to motion compatibility of the tool.

8. A method according to any of the preceding claims, where the treatment of the surface of the part is a painting procedure, and where the tool is a paint tool mounted on a robot.

9. A method according to any of claims 2-8, where a number of lines of treatment are distributed on the virtual surfaces, where a number of treating tool motions are being generated parallel to, possibly along, the lines of treatment, and where the treating tool motions are being scheduled into data of treatment procedures, and a data storage means such as an electronic file being generated for controlling the motion of the treating tool.

10. A method according to claim 9, where the number of lines of treatment are positioned in so-called virtual areas of treatment, preferably rectangles of treatment, said areas of treatment being generated for each group of virtual surfaces, so that the lines of treatment are distributed in such a way that all parts of the virtual surfaces are covered.

11. A method according to any of the preceding claims, said method comprising controlling each of the lines of treatment for establishing the extension of the patches found within the vicinity of the lines of treatment, the establishment being utilised for establishing whether the lines of treatment being controlled cover only continuously adjacently located patches or cover discontinuously non-adjacently located patches.

12. A method according to claim 10, where the treating tool procedures, said treating tool procedures encompassing control of the amount of treatment being applied along the lines of treatment, is determined not to apply treatment on extensions of the lines of treatment situated between patches that are discontinuously non-adjacently located patches.

13. A method according to any of the preceding claims, said method comprising assigning at least one of the following features to each of the patches: a geometrical feature such a specific shape such as a rib of the part in the region of the location represented by the patch in question, a textual feature such as a the roughness or the porosity of the surface of the part at the location of the patch, a physical feature such as the material, which the part is made of at the location of the patch in question or the temperature of the part at the location of the patch.

14. A method according to claim 13, where the treating tool procedures, said treating tool procedures encompassing controi of the amount of treatment being applied along the lines of treatment, is determined to apply treatment, amongst other conditions for applying treatment to the surface of the part, in relation to at least one of the features assigned to the patches.

15. Use of a method according to any of the preceding claims for treatment of a surface of a part by a wet painting process using the paint tool for applying water based paint on the parts.

16. Use of a method according to any of the preceding claims for treatment of a surface of a part by a wet painting process using the paint tool for applying solvent based paint on the parts.

17. Use of a method according to any of the preceding claims for treatment of a surface of a part by a coating process for corrosion protection using the tool for applying other material than paint for protecting the surface against corrosion.

18. Use of a method according to any of the preceding claims for treatment of a surface of a part by a hardening process using the tool for applying material for hardening the surface.

19. Use of a method according to any of the preceding claims for treatment of a surface of a part by a hardening process using the tool for applying heat to the surface material for hardening the surface.

20. Use of a method according to any of the preceding claims for treatment of a surface of a part by a sand blasting process using a tool for sand blasting and being mounted on a robot.

21. Use of a method according to any of the preceding claims for treatment of a surface of a part by a cleaning process using the tool for applying a liquid or a powder.

22. Use of a method according to any of the preceding claims for treatment of a surface of a part by a high-pressure cleaning process using the tool for applying a liquid or a powder under a pressure above one atmosphere.

23. Use of a method according to any of the preceding claims for treatment of a surface of a part by an air brush process using the tool for spraying with atmospheric air or another gas under a pressure above one atmosphere.

## Patentansprüche

1. Verfahren zum automatischen Vorbereiten der Behandlung einer Oberfläche eines Teils unter Verwendung eines Werkzeugs für die Behandlung, wobei das genannte Verfahren umfaßt:
- Approximieren einer gegebenen Freiform oder komplexen Oberflächengeometrie durch Definieren elementarer Oberflächengeometrien, **gekennzeichnet durch**
- Benutzen der elementaren Oberflächengeometrien zum Erstellen einer Anzahl sogenannter virtueller Oberflächen, wobei die genannten virtuellen Oberflächen als die mit einem Auftrag zu versehenden Bereiche angesehen werden, und
- schließlich Verwenden der genannten virtuellen Oberflächen zum Erstellen von Behandlungs-Vorgehensweisen, bevorzugt empirisch definierten Behandlungs-Vorgehensweisen, wobei eine von jeder Behandlungs-Vorgehensweise jeder der virtuellen Oberflächen zugeordnet wird.

2. Verfahren nach Anspruch 1, wobei die elementare Oberflächengeometrie aus einem sogenannten Flicken (patch) besteht, und wobei eine Anzahl virtueller Oberflächen jeder der sogenannten Hauptflächen zugeordnet wird.

3. Verfahren nach Anspruch 2, wobei das genannte Verfahren das Aufteilen der Oberfläche des Teiles in Flicken der Oberfläche umfaßt, jeder der Flicken der Oberfläche einer aus einer Anzahl der sogenannten Hauptflächen zugeteilt wird, die genannten Flicken und jede der genannten Hauptflächen verwendet werden, um eine Anzahl der sogenannten virtuellen Oberflächen zu definieren, und jede der genannten virtuellen Oberflächen verwendet wird, um Behandlungs-Vorgehensweisen zur Behandlung der Oberfläche zu erstellen.

4. Verfahren nach Anspruch 3, wobei die Hauptflächen **dadurch** erstellt werden, daß man einen Richtungsvektor, bevorzugt den Normalvektor, eines jeden der Flicken der Oberfläche bestimmt, und wobei die Richtungsvektoren der Flicken innerhalb von Richtungsvektorfeldern gesammelt werden und eine Hauptfläche definiert wird, die einen Richtungsvektor innerhalb des Richtungsvektorfeldes einer Anzahl von Flicken hat, und die genannten Flicken der in Frage stehenden Hauptfläche zugeordnet werden.

5. Verfahren nach Anspruch 3 oder Anspruch 4, wobei die virtuellen Oberflächen auf der Grundlage der Anzahl und der Richtung der Richtungsvektoren der Flicken innerhalb eines Richtungsvektorfeldes definiert werden, und die genannten virtuellen Oberflächen ferner auf der Grundlage eines oberflächenspezifischen Merkmals definiert werden, das ein Merkmal ist, das für eine Anzahl von Flicken spezifisch ist.

6. Verfahren nach einem der Ansprüche 2 bis 5, wobei die virtuellen Oberflächen in Gruppen in Bezug auf die Zuordnung zu den Hauptflächen sortiert werden.

7. Verfahren nach einem der Ansprüche 2 bis 6, wobei die virtuellen Oberflächen auch in Gruppen in Bezug zur Bewegungsfähigkeit des Werkzeugs sortiert werden.

8. Verfahren nach einem der vorhergehenden Ansprüche, wobei die Behandlung der Oberfläche des Teils eine Auftrag-Vorgehensweise ist, und wobei das Werkzeug ein Auftragwerkzeug ist, das an einem Roboter angebracht ist.

9. Verfahren nach einem der Ansprüche 2 bis 8, wobei eine Anzahl von Behandlungslinien auf den virtuellen Oberflächen verteilt wird, wobei eine Anzahl von Bewegungen des Behandlungswerkzeugs parallel und möglicherweise längs zu den Behandlungslinien dies er erzeugt werden, und wobei die Bewegungen des Behandlungswerkzeugs in Daten von Behandlungs-Vorgehensweisen festgelegt werden und Daten-Speichermittel, wie eine elektronische File erzeugt werden, um die Bewegung des Behandlungswerkzeuqs zu steuern.

10. Verfahren nach Anspruch 9, wobei die Anzahl von Behandlungslinien in sogenannten virtuellen Behandlungszonen angeordnet sind, bevorzugt Behandlungsrechtecken, und die Behandlungszonen für jede Gruppe virtueller Oberflächen so erzeugt werden, daß die Behandlungslinien auf eine solche Weise verteilt sind, daß alle Teile der virtuellen Oberflächen abgedeckt werden.

11. Verfahren nach einem der vorhergehenden Ansprüche, wobei das Verfahren die Steuerung jeder der Behandlungslinien umfaßt, um die Ausdehnung der in der Nahe der Behandlungslinien gefundenen Flecken einzurichten, wobei die Einrichtung verwendet wird, um festzulegen, ob die gesteuerten Behandlungslinien nur durchgehend benachbart angeordnete Flicken oder nicht-durchgehend nicht benachbart angeodnete Flicken überdecken.

12. Verfahren nach Anspruch 10, wobei bei den genannten Behandlungswerkteug-Vorgehensweisen die die behandlungswerkzeugvorgehensweisen-umfassende Steuerung des Ausmaßes der Behandlung, die längs der Behandlungslinien vorgenommen wird, so festgelegt ist, daß keine Behandlung auf Verlängerungen der Behandlungslinien vorgenommen wird, die zwischen Flicken liegen, die nicht-durchgehend nicht benachbart angeordnete Flicken sind.

13. Verfahren nach einem der vorgehenden Ansprüche, wobei das Verfahren umfaßt, wenigstens eines der folgenden Merkmale jedem der Flicken zuzuordnen: ein geometrisches Merkmal, wie eine spezifische Form, wie eine Rippe des Teils in dem Bereich des Orts, die vom fraglichen Flicken repräsentiert wird, ein Textur-Merkmal, wie die Rauhheit oder die Porosität des Teils an dem Ort des Flickens, ein physikalisches Merkmal, wie das Material, woraus das Teil am Ort des fraglichen Flickens hergestellt ist, oder die Temperatur am Ort des Flickens.

14. Verfahren nach Anspruch 13, wobei bei den Behandlungswerkzeug-Vorgehensweisen die behandlungswerkzeugvorgehensweisen-umfassende Steuerung des Ausmaßes der Behandlung, die längs der Behandlungslinien vorgenommen wird, so festgestellt ist, daß einer Behandlung, neben anderen Bedingungen zum Vornehmen der Behandlung auf der Oberfläche des Teils, in Bezug auf wenigstens eines der den Flicken zugeordneten Merkmale vorgenommen wird.

15. Verwendung eines Verfahrens nach einem der vorangehenden Ansprüche zum Behandeln einer Oberfläche eines Teils durch einen Naß-Auftragvorgang unter Verwendung des Auftragwerkzeugs zum Aufbringen einer wasserbasierten Farbe auf die Teile.

16. Verwendung eines Verfahrens nach einem der vorangehenden Ansprüche zum Behandeln einer Oberfläche eines Teils durch einen Naß-Auftragvorgang unter Verwendung des Auftragwerkzeugs zum Aufbringen einer lösungsmittelbasierten Farbe auf die Teile.

17. Verwendung eines Verfahrens nach einem der vorangehenden Ansprüche zum Behandeln einer Oberfläche eines Teils durch einen Beschichtungsvorgang zum Korrosionsschutz unter Verwendung des Werkzeugs zum Aufbringen eines anderen Materials als Farbe zum Schutz der Oberfläche gegen Korrosion.

18. Verwendung eines Verfahrens nach einem der vorangehenden Ansprüche zum Behandeln einer Oberfläche eines Teils durch einen Härtungsvorgang unter Verwendung des Werkzeugs zum Aufbringen von Material zum Härten der Oberfläche.

19. Verwendung eines Verfahrens nach einem der vorangehenden Ansprüche zum Behandeln einer Oberfläche eines Teils durch einen Härtungsvorgang unter Verwendung des Werkzeugs zum Aufbringen von wärme auf das Oberflächenmaterial zum Härten der Oberfläche.

20. Verwendung eines Verfahrens nach einem der vorangehenden Ansprüche zum Behandeln einer Oberfläche eines Teils durch einen Sandstrahlvorgang unter Verwendung eines Werkzeugs zum Sandstrahlen, das an einem Roboter angebracht ist.

21. Verwendung eines Verfahrens nach einem der vorangehenden Ansprüche zum Behandeln einer Oberfläche eines Teils durch einen Reinigungsvorgang unter Verwendung des Werkzeugs zum Aufbringen einer Flüssigkeit oder eines Pulvers.

22. Verwendung eines Verfahrens nach einem der vorangehenden Ansprüche zum Behandeln einer Oberfläche eines Teils durch einen Hochdruck-Reinigungsvorgang unter Verwendung des Werkzeugs zum Aufbringen einer Flüssigkeit oder eines Pulvers unter einem Druck von mehr als einer Atmosphäre.

23. Verwendung eines Verfahrens nach einem der vorangehenden Ansprüche zum Behandeln einer Oberfläche eines Teils durch einen Airbrush-Vorgang unter Verwendung des Werkzeugs zum Aufsprühen, zusammen mit atmosphärischer Luft oder einem anderen Gas unter einem Druck von mehr als einer Atmosphäre.

## Revendications

1. Procédé destiné à préparer automatiquement le traitement d'une surface d'une pièce en utilisant un outil pour le traitement, ledit procédé comprenant :
l'approximation de la géométrie d'une surface à forme libre ou complexe existante en définissant les géométries des surfaces élémentaires, **caractérisée par** :
l'utilisation desdites géométries des surfaces élémentaires pour déterminer un certain nombre de surfaces dites virtuelles, lesdites surfaces virtuelles étant considérées comme des régions à peindre, et
enfin, l'utilisation desdites surfaces virtuelles pour établir des procédures de traitement, de préférence des procédures de traitement définies de façon empirique, l'une de chaque procédure de traitement étant attribuée à chacune des surfaces virtuelles.

2. Procédé selon la revendication 1, dans lequel la géométrie des surfaces élémentaires comprend ce que l'on appelle un secteur, et dans lequel un certain nombre de surfaces virtuelles sont attribuées à chacune des faces dites principales.

3. Procédé selon la revendication 2, ledit procédé comprenant la division de la surface de la pièce détachée en secteurs de la surface, chacun desdits secteurs de la surface étant attribué à l'une quelconque d'un certain nombre de faces dites principales, lesdits secteurs et chacune desdites faces principales étant utilisés pour définir un certain nombre de surfaces dites virtuelles, et chacune desdites surfaces virtuelles étant utilisée pour déterminer des procédures de traitement destinées à traiter la surface.

4. Procédé selon la revendication 3, dans lequel les faces principales sont établies en déterminant un vecteur directionnel, de préférence le vecteur normal, de chacun des secteurs de la surface, et dans lequel les vecteurs directionnels des secteurs sont rassemblés à l'intérieur de champs de vecteurs directionnels, et une face principale étant définie en ayant un vecteur directionnel à l'intérieur du champ de vecteurs directionnels d'un certain nombre de secteurs, et lesdits secteurs étant attribués à la face principale en question.

5. Procédé selon la revendication 3 ou 4, dans lequel les surfaces virtuelles sont définies sur la base du nombre de vecteurs directionnels des secteurs à l'intérieur d'un champ de vecteurs directionnels, et de la direction de ceux-ci et lesdites surfaces virtuelles étant définies en outre sur la base d'une caractéristique spécifique de surface qui est une caractéristique spécifique à un certain nombre de secteurs.

6. Procédé selon l'une quelconque des revendications 2 à 5, dans lequel les surfaces virtuelles sont triées par groupes suivant l'attribution des faces principales.

7. Procédé selon l'une quelconque des revendications 2 à 6, dans lequel les surfaces virtuelles sont également triées par groupes suivant la compatibilité de mouvement de l'outil.

8. Procédé selon l'une quelconque des revendications précédentes, dans lequel le traitement de la surface de la pièce détachée est une procédure de peinture, et dans lequel l'outil est un outil de peinture monté sur un robot.

9. Procédé selon l'une quelconque des revendications 2 à 8, dans lequel un certain nombre de lignes de traitement sont réparties sur les surfaces virtuelles, dans lequel un certain nombre de mouvements de l'outil de traitement sont générés parallèlement aux lignes de traitement, éventuellement le long de celles-ci et dans lequel les mouvements de l'outil de traitement sont programmés en données de procédures de traitement, et un moyen de mémorisation des données tel qu'un fichier électronique est généré pour commander le mouvement de l'outil de traitement.

10. Procédé selon la revendication 9, dans lequel le nombre de lignes de traitement est placé dans les zones de traitement dites virtuelles, de préférence des rectangles de traitement, lesdites zones de traitement étant générées pour chaque groupe de surfaces virtuelles, de telle sorte que les lignes de traitement sont réparties de manière à couvrir toutes les pièces détachées des surfaces virtuelles.

11. Procédé selon l'une quelconque des revendications précédentes, ledit procédé comprenant la commande de chacune des lignes de traitement pour déterminer le prolongement des secteurs trouvés à proximité des lignes de traitement, l'établissement étant utilisé pour déterminer si les lignes de traitement commandées couvrent uniquement les secteurs situés de façon adjacente et continue ou si elles couvrent les secteurs situés de façon non adjacente et discontinue.

12. Procédé selon la revendication 10, dans lequel les procédures d'outil de traitement, lesdites procédures d'outil de traitement englobant la commande de la quantité de traitement appliqué le long des lignes de traitement, sont déterminées pour ne pas appliquer de traitement sur les prolongements des lignes de traitement situées entre les secteurs qui sont placés de façon non adjacente et discontinue.

13. Procédé selon l'une quelconque des revendications précédentes, ledit procédé comprenant l'attribution d'au moins l'une des caractéristiques suivantes à chacun des secteurs : une caractéristique géométrique telle qu'une forme spécifique telle qu'une nervure de la pièce détachée dans la région de l'emplacement représenté par le secteur en question, une caractéristique textuelle telle que la mgosité ou la porosité de la surface de la pièce détachée au niveau de l'emplacement du secteur, une caractéristique physique telle que le matériau dont la pièce détachée se compose au niveau de l'emplacement du secteur en question ou la température du secteur au niveau de l'emplacement du secteur.

14. Procédé selon la revendication 13, dans lequel les procédures d'outil de traitement, lesdites procédures d'outil de traitement englobant la commande de la quantité de traitement appliqué le long des lignes de traitement, sont déterminées à appliquer le traitement, parmi d'autres conditions d'application du traitement sur la surface de la pièce détachée, suivant au moins une des caractéristiques attribuées aux secteurs,

15. Utilisation d'un procédé selon l'une quelconque des revendications précédentes pour le traitement d'une surface d'une pièce détachée grâce à un processus de peinture fraîche utilisant l'outil de peinture pour appliquer une peinture à l'eau sur les pièces détachées.

16. Utilisation d'un procédé selon l'une quelconque des revendications pour le traitement d'une surface d'une pièce détachée grâce à un processus de peinture fraîche utilisant l'outil de peinture pour appliquer une peinture à base de solvant sur les pièces détachées.

17. Utilisation d'un procédé selon l'une quelconque des revendications pour le traitement d'une surface d'une pièce détachée grâce à un processus de revêtement pour une protection contre la corrosion utilisant l'outil pour appliquer un autre matériau que la peinture pour protéger la surface contre la corrosion.

18. Utilisation d'un procédé selon l'une quelconque des revendications précédentes pour le traitement d'une surface d'une pièce détachée grâce à un processus de durcissement utilisant l'outil pour appliquer le matériau pour faire durcir la surface.

19. Utilisation d'un procédé selon l'une quelconque des revendications précédentes pour le traitement d'une surface d'une pièce détachée grâce à un processus de durcissement utilisant l'outil pour appliquer de la chaleur sur les matériaux de surface pour faire durcir la surface.

20. Utilisation d'un procédé selon l'une quelconque des revendications précédentes pour le traitement d'une surface d'une pièce détachée grâce à un processus de sablage utilisant un outil de sablage et monté sur un robot.

21. Utilisation d'un procédé selon l'une quelconque des revendications précédentes pour le traitement d'une surface d'une pièce détachée grâce à un processus de nettoyage utilisant l'outil pour appliquer un liquide ou une poudre.

22. Utilisation d'un procédé selon l'une quelconque des revendications précédentes pour le traitement d'une surface d'une pièce détachée grâce à un processus de nettoyage à haute pression utilisant l'outil pour appliquer un liquide ou une poudre sous une pression supérieure à une atmosphère.

23. Utilisation d'un procédé selon l'une quelconque des revendications précédentes pour le traitement d'une surface d'une pièce détachée grâce à un processus de pistolet pulvérisateur utilisant l'outil pour pulvériser l'air atmosphérique ou tout autre gaz sous une pression supérieure à une atmosphère.
